# EUROPEAN PATENT SPECIFICATION

(11) **EP 1 727 699 B1**
(45) Date of publication and mention of the grant of the patent: **18.08.2010**
(21) Application number: 05711150.2
(22) Date of filing: 01.03.2005
(51) Int. Cl.: B60K 31/00, G01S 13/60, G01C 21/26, G01P 3/50

(54) **GEAR SHIFTING SYSTEM**
GANGSCHALTSYSTEM
SYSTEME DE CHANGEMENT DE VITESSE

(30) Priority: 23.03.2004 SE 0400744
(43) Date of publication of application: 06.12.2006
(73) Proprietor: Scania CV AB (publ), 151 87 Södertälje (SE)
(72) Inventor: KJELL, Anders, S-112 47 Stockholm (SE); RICKMAN, Johnny, S-151 38 Södertälje (SE)
(86) International application number: PCT/SE2005/000290
(87) International publication number: WO 2005/090110

(56) References cited:
- WO-A1-98/43192
- DE-A1- 3 925 831
- US-A- 5 243 564
- US-A- 5 828 585
- US-A- 6 072 424

## Description

### Technical Field of the Invention

The present invention relates to a method for determining a vehicle speed for an automatic gear shifting system. The invention also relates to a vehicle with an automatic gear shifting system, a computer program for determining the vehicle speed for automatic gear shift control, a computer program product and an electronic control unit comprising the computer program.

### Background of the invention

An automatic gearbox for a vehicle is typically controlled by an ECU (electronic control unit), which controls gear selection so as to achieve an engine operation considered appropriate. A number of parameters may be considered when determining an initiation of gear change. Such parameters suitably comprise the vehicle speed, which is calculated as a function of e.g. the speed of a propeller shaft for the driven wheels. A method and apparatus for automatically controlling gear selection, wherein the speed of the propeller shaft is measured as described in US-6480776-B1. An alternative known in the art for calculating the vehicle speed for determination of a gear change utilises a sensed value of the engine speed or the crankshaft speed in combination with a current gear ratio between the speed of a gearbox input shaft and a gearbox output shaft/propeller shaft. Another alternative would be to utilise the rate of rotation of the wheels, which may be retrieved from wheel speed sensors adjacent to each one of the wheels respectively. However, processed signals from such wheel-speed sensors are generally inferior to the quality provided by a speed sensor for e.g. the propeller shaft and are therefore not used when calculating the vehicle speed.

A modem vehicle is often equipped with a TCS (traction control system) and an ABS (Antilock braking system), which typically comprises wheel-speed sensors and an ABS/TCS ECU. The ABS/TCS ECU is responsible for controlling a wheel brake when the ABS/TCS ECU detects incipient lockup of a corresponding wheel. The ABS/TCS ECU also controls the wheel brake for a driven wheel which shows a tendency to spin and/or adapts the engine torque to a drive torque which can be transferred to the road, so that the vehicle retains its stability.

Especially when driving on smooth or slippery roads on a gradient or when cornering, the driven wheels may spin. The TCS is therefore activated. Due to the spinning driven wheels and the braking controlled by the ABS/TCS ECU, a calculated value of the vehicle speed based on the propeller shaft speed or any of its alternatives mentioned above is not accurate relatively to the real vehicle speed. Since the calculated value is used as an input parameter to an ECU for automatic gear changing, this ECU may initiate a gear change based on an erroneous vehicle speed. A gear upshift of at least one gear step may thus occur when driving uphill, which may cause inconvenience for the driver as well as disturbing queues of other vehicles behind the vehicle. This is especially true if the vehicle is a heavy vehicle, such as a truck or bus, which generally has a longer acceleration time than an ordinary car.

US-A-5 243 564 discloses the subject matter of the preambles of independent claims 1, 3 and 5 and presents a Doppler-effect vehicle ground-speed detecting apparatus for detecting the ground speed of the vehicle irrespectively of a change in the angle of the wave transmitter and receiver relative to the road surface, which occurs due to pitching or inclination of the vehicle body during running. The apparatus comprises a wheel speed detecting means for obtaining an estimated speed of the vehicle, on the basis of the rotating speeds of the plurality of wheels detected by wheel speed sensors. This estimated value of the vehicle speed is used to compensate the vehicle ground speed detected with the Doppler-effect. Since the wheel speeds of the plurality of wheels of the vehicle can vary due to the anti-lock control, the determined vehicle speed is not an accurate value.

On e.g. a tractor and semi-trailer equipage, the tractor has a front wheel axle and a rear wheel axle, wherein the rear wheel axle is the driving axle. During a retarding motion, the front wheel axle is exerted to a higher force than the rear wheel axle. Therefore while braking, incipient lockup of the driven wheels occurs earlier and more often than the non-driven wheels on the front wheel axle. Incipient lockup of the rear wheels before lockup of the front wheels naturally occurs also for vehicles having all wheels driven. Hence the ABS system controls the braking of the rear wheels more actively than the braking of the front wheels. The involvement of the ABS system also disturbs the accuracy of the calculated value of the vehicle speed, since the propeller shaft speed or any of its alternatives is affected by the ABS system. Thus a similar problem to the one described above regarding a gear change when the driven wheels are spinning may arise also when the ABS controls the wheel brakes.

### Summary of the invention

It is an object of the invention to avoid or at least decrease the number of incorrect automatic gear changes when a vehicle is braked by an ABS or a wheel is spinning.

The invention relates to a method for determining a vehicle speed used for gear shift control of an automatic gear shifting system according to claim 1.

Hereby is achieved that the vehicle speed is determined by means previously not used by an automatic gear shifting system for vehicle speed determination, since the vehicle speed value received from these means normally is considered as poor compared to a vehicle speed value based on a propeller shaft speed. The vehicle speed value based on the propeller shaft is however discovered as being inaccurate compared to the value received from these means when the vehicle is braked under the influence of an ABS and e.g. a TCS. Hence a better estimation of the vehicle speed is achieved when the vehicle is affected by an ABS and e.g. a TCS.

According to a preferred embodiment, the method comprises the step of:
calculating the vehicle speed based on an engine speed, a propeller shaft speed and/or
a crank shaft speed, if the at least one driven wheel is not spinning or shows no tendency to spin or the vehicle is not braked under the influence of the antilock braking system. Hereby is achieved that calculation of the vehicle speed is either based on an engine speed, a propeller shaft speed and/or a crank shaft speed, or based on the rate of rotation of at least one of the non-driven wheels only.

The invention also relates to a vehicle, e.g. a truck or a bus according to claim 3.

The vehicle may comprise calculating means for calculating the vehicle speed for said automatic gear shifting system based on an engine speed, a propeller shaft speed and/or a crank shaft speed, if the at least one driven wheel is not spinning or shows no tendency to spin or the vehicle is not braked under the influence of the antilock braking system.

The invention also relates to a computer program for determining a vehicle speed, for automatic gear shift control according to claim 5.

Furthermore the invention relates to a computer program product comprising a computer readable medium on which said aforementioned computer program is stored.

Moreover the invention relates to an electronic control unit adapted for connection to a vehicle internal network bus in a vehicle, comprising a storing means on which said aforementioned computer program is stored.

In a preferred embodiment the electronic control unit is a gearbox electronic control unit. Hereby is achieved that the gearbox electronic control unit itself determines the vehicle speed for an automatic gear shifting system.

### Brief Description of the Drawings

The objects, advantages and effects as well as features of the present invention will be more readily understood from the following detailed description of a method and a vehicle, as well as other embodiments, when read together with the accompanying drawings, in which:
Fig. 1 schematically shows a vehicle according to the invention,
Fig 2 schematically shows an ECU according to the invention, and
Fig 3 is a flow diagram of an embodiment of a method according to the invention.

### Detailed Description of Embodiments

While the invention covers various modifications and alternative constructions, embodiments of the invention are shown in the drawings and will hereinafter be described in detail. It is to be understood, however, that the specific description and drawings are not intended to limit the invention to the specific forms disclosed. On the contrary, it is intended that the scope of the claimed invention includes all modifications and alternative constructions thereof falling within the scope of the invention as expressed in the appended claims.

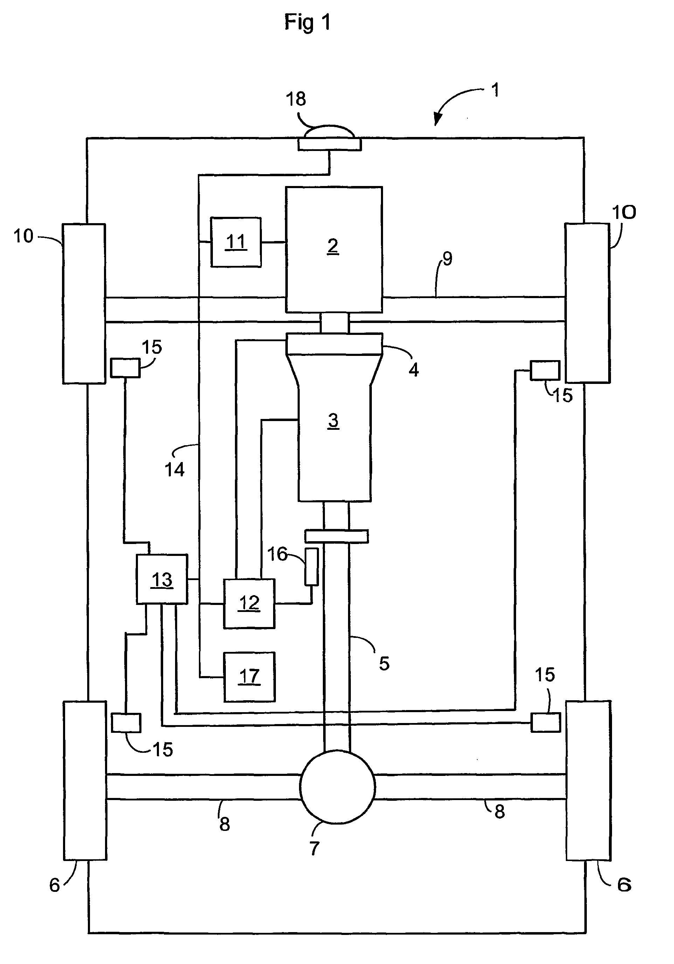

Fig. 1 shows a schematic block diagram of a vehicle 1, such as a bus and a truck, comprising a motor 2 for propelling the vehicle, such as an internal combustion engine, a hybrid motor and an electric motor. The motor 2 is connected to an input shaft for a gearbox 3 via a clutch arrangement 4. A motor torque is thus transmitted to a propeller shaft 5 via the gearbox 3 and the propeller shaft 5 further transmits the motor torque to rear, driven wheels 6 via a differential 7 and corresponding half shafts 8. The vehicle 1 also comprises at least one front axle 9 with at least two non-driven wheels 10. A motor ECU 11 is arranged for controlling the motor 2, a gearbox ECU 12 is arranged for controlling inter alia the clutch arrangement 4 and the gearbox 3 and an ABS/TCS-ECU 13 is arranged for controlling the wheel brakes (not shown) for each one of the driven wheels 6 and non-driven wheels 10. The motor ECU 11, the ABS/TCS-ECU 13 and the gearbox ECU 12 are able to communicate with each other via a vehicle internal network bus 14, e.g. a bus compatible with CAN (Controller Area Network), TTCAN (Time-triggered Controller Area Network) and/or FlexRay. The ABS/TCS-ECU 13 belongs to an ABS and a TCS, wherein the TCS can be said to be an extension of the ABS in the sense that the TCS comprises the same hardware as the ABS: wheel-speed sensors 15 for each one of the wheels, the wheel brakes and an hydraulic modulator (not shown) located between the ABS/TCS-ECU 13 and the wheel brakes. The hardware and software of the ABS and TCS as well as their functions are known to a person skilled in the art and are therefore not described more in detail.

At least one speed sensor 16 for sensing the speed of rotation of the propeller shaft 5 is in this embodiment connected to the gearbox ECU 12. The purpose of the speed sensor 16 is to receive a value used by the gearbox ECU 12 to calculate a vehicle speed. The vehicle speed is then used as an input parameter in a calculation to determine if an automatic gear change shall be initiated by the gearbox ECU 12. Different calculation methods involving the vehicle speed for determining if an automatic gear change shall be initiated are known to a person skilled in the art and are not as such part of this invention. Such calculation methods are therefore not described more in detail. The speed sensor 16 may of course be connected to another ECU than the gearbox ECU 12 as long as the gearbox ECU 12 is able to retrieve the value, e.g. via the vehicle internal network bus 14. The calculation of the vehicle speed is according to the invention also not limited to be processed by the gearbox ECU 12, but may be processed by another ECU, such as the ABS/TCS-ECU 13, directly or indirectly connected to the vehicle internal network bus 14. Although not shown in any drawings, instead of arranging the speed sensor 16 adjacent to the propeller shaft 5, the speed sensor may be positioned for sensing the speed of rotation of a fly wheel, a crankshaft, an apparatus directly driven by the motor 2, such as an alternator, and/or the input shaft for the gearbox. A calculation of the vehicle speed based on the speed of rotation for these three elements is similar to the calculation based on the speed of rotation of the propeller shaft 5 and is known to a person skilled in the art.

The vehicle 1 may receive positioning data from a positioning system in order to, inter alia, determine a geographical position and velocity/speed of the vehicle 1. Examples of positioning systems are GPS (Global Positioning System), differential GPS, Glonas, Orbcomm and Gallileo. The use of positioning systems for determining a vehicle position is in itself known in the art, and will therefore not be described in detail. In the embodiment shown in Fig 1, a positioning system unit in the form of a GPS signal receiving and processing unit is connected to the vehicle internal network bus 14, but may be comprised in the gearbox ECU 12 or any other ECU connected to the vehicle internal network bus 14. The GPS signal receiving and processing unit is in this embodiment adapted to calculate an instantaneous speed for the vehicle based on the received signals from satellites and, in case of a differential GPS, base stations. Such a receiver and processing unit are known to a person skilled in the art and is therefore not described in detail. Alternatively this calculation of the vehicle speed may be performed by the gearbox ECU 12 or any other ECU based on the signals received from the satellites and base stations.

The vehicle also comprises a vehicle radar system 18, which is as such known in the art, connected to the vehicle internal network bus 14. Such a vehicle radar system 18 may be utilised by e.g. ACC-systems (Adaptive cruise control systems) and the vehicle radar system 18 also calculates a vehicle speed.

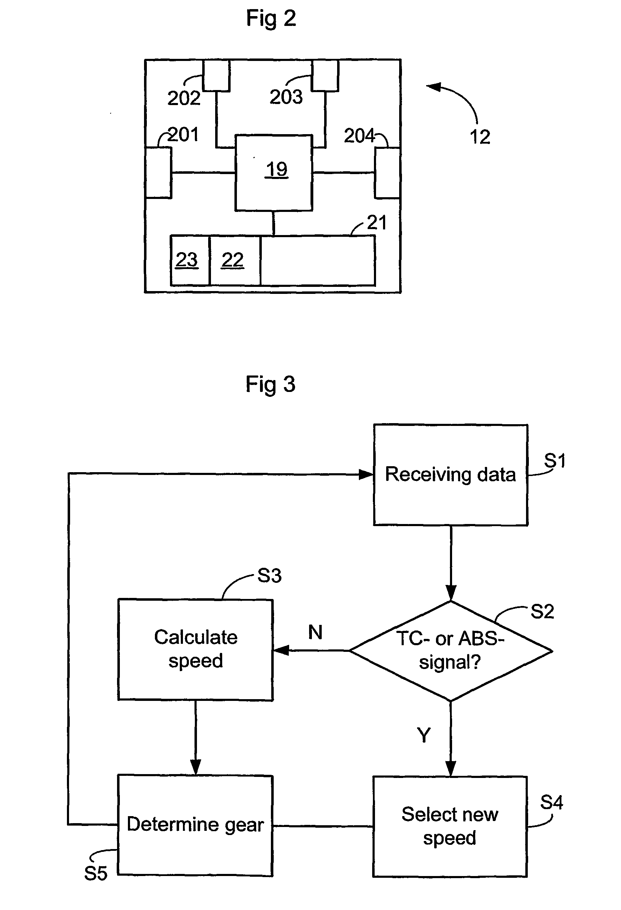

An example of an ECU according to the invention, in this embodiment the gearbox ECU 12, is schematically disclosed in Fig. 2. The gearbox ECU 12 here comprises a processing means 19 connected to a first port 201 in order to enable communication with other ECUs, such as the ABS/TCS-ECU 13 via the vehicle internal network bus 14, a second port 202 for communications with actuator means (not shown) for the clutch arrangement 4, a third port 203 for communication with actuator means (not shown) for the gearbox 3, and a fourth port 204 for receiving signals from the speed sensor 16. The processing means is also connected to at least one computer program product in the form of a storing means 21, such as a hard disk, a flash memory, a ROM (Read-only memory), an EPROM (Erasable Programmable ROM) or an EEPROM (Electrically Erasable Programmable ROM). The storing means in this embodiment comprises inter alia a computer program for gear shift control. This computer program comprises determining means in the form of a computer program (programme module) for determining a vehicle speed 22 and calculating means in the form of a computer program for vehicle speed calculation 23. In accordance with what is said above in conjunction with Fig 1, the computer program for vehicle speed calculation 23 is as such known in the art and may alternatively or in addition be installed in another ECU connected to the vehicle internal network bus 14.

Having described embodiments of a system and a vehicle, some embodiments of a method according to the invention will now be described in conjunction with Fig 3. In a first step S1, the gearbox ECU 12 receives signal/data from the speed sensor 16 and the ABS/TCS-ECU 13. The data from the ABS/TCS-ECU 13 comprises a value of the rate of rotation for each one of the wheels, 6 and 10 respectively, and indicators showing whether the TCS or the ABS is currently controlling the wheel brakes. A value of the vehicle speed may according to another embodiment of step S1 also be received from the GPS signal receiving and processing unit in addition to the value of the rate of rotation for each one of the wheels from the ABS/TCS-ECU 13. This vehicle speed may according to yet another embodiment of step S1 be retrieved from the vehicle radar system 18, in addition to the values of the vehicle speed received from the ABS/TCS-ECU 13 and the GPS signal receiving and processing unit.

In a second step S2, the computer program for gear shift control 22 causes the gearbox ECU 12 to determine if there is an incipient lockup of any of the wheels or if at least one of the driven wheels shows a tendency to spin. In this embodiment this is determined by reading the indicators showing whether or not the TCS or the ABS is currently controlling the wheel brakes. If one of the indicators shows that the TCS or the ABS is currently controlling the wheel brakes the method continues with a fourth step S4, else the method continues with a third step S3. In alternative embodiments of the step S2, the incipient lockup or spin tendency may be determined/calculated in other ways or through other means, such as computation by the gearbox ECU 12 based on e.g. the signals received from the speed sensor 16.

In step S3 the computer program for vehicle speed calculation 23 causes the gearbox ECU 12 to calculate an instantaneous vehicle speed based on the signals from the speed sensor 16. Such a calculation is known to a person skilled in the art and is therefore not described in detail. After step S3 the method continues with a fifth step S5, in which the calculated vehicle speed of step S3 is used as an input parameter in a calculation for determining if a gear change shall be initiated. Such a calculation is processed by the gearbox ECU 12 through the computer program for gear shift control 22. After step S5 the method returns to step S1. The vehicle speed and the current gear ratio makes it possible to calculate the engine speed, which in turn is used to determine which gear should preferably be activated in respect of e.g. economical driving. The computer program for gear shift control may e.g. adapt the gearbox ECU 12 to choose a gear according to a preferred engine speed after a gear shift considering the current vehicle speed.

In step S4 the computer program for vehicle speed calculation 23 causes the gearbox ECU 12 to first calculate a mean value of the rate of rotation for the non-driven wheels 10 and then calculate a vehicle speed based on the mean value, e.g. by multiplying the mean value by a known or estimated value of the radius of one of the non-driven wheels. The calculated vehicle speed of step S4 is subsequently used as an input parameter in the calculation of step S5. In another embodiment of step S4, the rate of rotation for one of the non-driven wheels is used for calculating the vehicle speed. In yet an alternative embodiment of step S4, where a value of the vehicle speed has been received from the GPS signal receiving and processing unit in addition to the value of the rate of rotation for the non-driven wheels, this GPS based vehicle speed is used as an input parameter in the calculation of step S5. In still another alternative embodiment of step S4, a mean value of the GPS based vehicle speed and the vehicle speed based on the mean value of the rate of rotation for the non-driven wheels 10 is calculated and is used as an input parameter in the calculation of step S5. A further alternative embodiment of step S4, comprises the step of choosing the GPS based vehicle speed, if available. Otherwise the vehicle speed based on the rate of rotation of the non-driven wheels 10 is used. GPS signals from satellites and/or base stations may be unavailable e.g. in cases when the vehicle 1 moves through underground or underwater tunnels, i.e. shadow areas, or among tall buildings causing disturbing reflections. In yet an alternative embodiment of step S4, where a value of the vehicle speed has been received from the vehicle radar system 18, that value is used, either directly as an input parameter in the calculation of step S5, or as one of the values when calculating a mean value based also on the GPS based vehicle speed and the vehicle speed based on the rate of rotation of the non-driven wheels 10.

In the embodiments described above, both the situations where a driven wheel is spinning or shows a tendency to spin and where the AB S controls the braking of the vehicle have been considered. It must however be understood that the invention also covers embodiments where only one of the two situations is considered, e.g. embodiments where a step corresponding to the second step S2 above, only comprises determination of whether or not there is an incipient lockup of any of the wheels. An example of when such an embodiment is suitable is when a vehicle comprises an ABS, but no TCS. Examples of a vehicle where embodiments related only to the determination of whether at least one of the driven wheels are spinning or shows a tendency to spin are applicable, are vehicles comprising a TCS or vehicles having an ABS, but no TCS, to ether with a gearbox ECU comprising a computer program for determining whether the driven wheels are spinning or show a tendency to spin through received signals from the speed sensor 16. Hence it must be understood that, e.g., the invention is not limited to be implemented in vehicles having an ECU that comprises both ABS and TCS. A vehicle may e.g. comprise an ECU with an ABS computer program and another ECU with a TCS computer program.

## Claims

1. A method for determining a vehicle (1) speed used for gear shift control of an automatic gear shifting system, the vehicle having an automatic gear shifting system, driven wheels (6), non-driven wheels (10), a system for determining if at least one of the driven wheels (6) is spinning or shows a tendency to spin and an antilock braking system, the method comprising the step of:
- determining if at least one of the driven wheels (6) is spinning or shows a tendency to spin and/or if the vehicle (1) is braked under influence of the antilock braking system, and is **characterised in that** it further comprises the step of :
- determining the vehicle speed based on the rate of rotation of one or more of the non-driven wheels (10) only, if either the at least one driven wheel (6) is spinning or shows a tendency to spin or the vehicle (1) is braked under influence of the antilock braking system.

2. A method according to claim 1, comprising the step of:
calculating the vehicle speed based on an engine speed, a propeller shaft speed and/or
a crank shaft speed, if the at least one driven wheel (6) is not spinning or shows no tendency to spin or the vehicle (1) is not braked under the influence of the antilock braking system.

3. A vehicle (1) comprising
an automatic gear shifting system, driven wheels (6), non-driven wheels (10),
a system for determining if at least one of the driven wheels (6) is spinning or shows a tendency to spin and an antilock braking system,
**characterised by**
calculation means (23) for calculating a vehicle speed used in the control of the gear shift of said automatic gear shifting system based on the rate of rotation of one or more of the non-driven wheels (10) only, and
determining means (22) for determining the vehicle speed for controlling the gear shift of said automatic gear shifting system based on the rate of rotation of one or more of the non-driven wheels (10) only, if either the at least one driven wheel (6) is spinning or shows a tendency to spin or the vehicle (1) is braked under influence of the antilock braking system.

4. A vehicle (1) according to claim 3, **characterised by** calculating means for calculating the vehicle speed for controlling the gear shift of said automatic gear shifting system based on an engine speed, a propeller shaft speed and/or a crank shaft speed, if the at least one driven wheel (6) is not spinning or shows no tendency to spin or the vehicle (1) is not braked under the influence of the antilock braking system.

5. A computer program for determining a vehicle speed for automatic gear shift control, comprising computer readable code means which, when run on an electronic control unit in a vehicle (1) comprising an automatic gear shifting system, driven wheels (6), non-driven wheels (10), a system for determining if at least one of the driven wheels (6) is spinning or shows a tendency to spin and an antilock braking system, causes the electronic control unit to
- determine if at least one of the driven wheels (6) is spinning or shows a tendency to spin and/or if the vehicle (1) is braked under influence of the antilock braking system, and is **characterised in that** it further causes the electronic control unit to
- determine the vehicle speed based on the rate of rotation of one or more of the non-driven wheels (10) only, if either the at least one driven wheel (6) is spinning or shows a tendency to spin or the vehicle (1) is braked under influence of the antilock braking system.

6. A computer program product comprising a computer readable medium on which a computer program according to claim 5 is stored.

7. An electronic control unit adapted for connection to a vehicle internal network bus (14) in a vehicle (1), comprising a storing means (21) on which a computer program according to claim 5 is stored.

8. An electronic control unit according to claim 7, wherein the electronic control unit is a gearbox electronic control unit (12).

## Patentansprüche

1. Verfahren zum Bestimmen der Geschwindigkeit eines Fahrzeugs (1), die für eine Gangschaltungssteuerung eines automatischen Gangschaltsystems verwendet wird, wobei das Fahrzeug ein automatisches Gangschaltsystem, angetriebene Räder (6), nicht angetriebene Räder (10), ein System zum Bestimmen, ob mindestens eines der angetriebenen Räder (6) durchdreht oder dazu tendiert durchzudrehen und ein Antiblockierbremssystem aufweist, wobei das Verfahren den Schritt umfasst:
- Bestimmen, ob mindestens eines der angetriebenen Räder (6) durchdreht oder dazu tendiert durchzudrehen und/oder ob das Fahrzeug (1) unter Einwirkung des Antiblockiersystems gebremst wird, und
**dadurch gekennzeichnet, dass** es weiter den Schritt umfasst:
- Bestimmen der Fahrzeuggeschwindigkeit aufgrund der Drehzahl von einem oder mehreren der nicht angetriebenen Räder (10), nur dann, wenn entweder das mindestens eine angetriebene Rad (6) durchdreht oder dazu tendiert durchzudrehen oder das Fahrzeug (1) unter Einwirkung des Antiblockiersystems gebremst wird.

2. Verfahren nach Anspruch 1, umfassend den Schritt:
Berechnen der Fahrzeuggeschwindigkeit aufgrund einer Motordrehzahl, einer Antriebswellendrehzahl und/oder einer Kurbelwellendrehzahl, wenn das mindestens eine angetriebene Rad (6) nicht durchdreht oder nicht dazu tendiert durchzudrehen oder das Fahrzeug (1) nicht unter Einwirkung des Antiblockiersystems gebremst wird.

3. Fahrzeug (1), umfassend
ein automatisches Gangschaltsystem, angetriebene Räder (6), nicht angetriebene Räder (10), ein System zum Bestimmen, ob mindestens eines der angetriebenen Räder (6) durchdreht oder dazu tendiert durchzudrehen, und ein Antiblockiersystem, **gekennzeichnet durch** Berechnungsmittel (23) zum Berechnen einer Fahrzeuggeschwindigkeit, die in der Steuerung der Gangschaltung des automatischen Gangschaltsystems verwendet wird, aufgrund der Drehzahl von einem oder mehreren der nicht angetriebenen Räder (10), und
Bestimmungsmittel (22) zum Bestimmen der Fahrzeuggeschwindigkeit für die Steuerung der Gangschaltung des automatischen Gangschaltsystems aufgrund der Drehzahl von einem oder mehreren der nicht angetriebenen Räder (10), nur dann, wenn entweder mindestens eines der angetriebenen Räder (6) durchdreht oder tendiert durchzudrehen oder das Fahrzeug (1) unter Einwirkung des Antiblockiersystems gebremst wird.

4. Fahrzeug (1) nach Anspruch 3, **gekennzeichnet durch**
Berechnungsmittel zum Berechnen der Fahrzeuggeschwindigkeit für die Steuerung der Gangschaltung von dem automatischen Gangschaltsystem aufgrund einer Motordrehzahl, einer Antriebswellendrehzahl und/oder einer Kurbelwellendrehzahl, wenn das mindestens eine angetriebene Rad (6) nicht durchdreht oder nicht dazu tendiert durchzudrehen oder das Fahrzeug (1) nicht unter Einwirkung des Antiblockiersystems gebremst wird.

5. Computerprogramm zum Bestimmen einer Fahrzeuggeschwindigkeit für eine automatische Gangschaltsteuerung, umfassend ein computerlesbares Codemittel, welches dann, wenn es in einer elektronischen Steuereinheit in einem Fahrzeug (1) ausgeführt wird, das ein automatisches Gangschaltsystem, angetriebene Räder (6), nicht angetriebene Räder (10), ein System zum Bestimmen, ob mindestens eines der angetriebenen Räder (6) durchdreht oder dazu tendiert durchzudrehen, und ein Antiblockiersystem umfasst, die elektronische Steuereinheit veranlasst zum
- Bestimmen, ob wenigstens eines der angetriebenen Räder (6) durchdreht oder dazu tendiert durchzudrehen und/oder ob das Fahrzeug (1) unter Einwirkung des Antiblockiersystems gebremst wird,
und **dadurch gekennzeichnet, dass** es die elektronische Steuereinheit weiter veranlasst
- die Fahrzeuggeschwindigkeit aufgrund der Drehzahl von einem oder mehreren der nicht angetriebenen Räder (10) zu bestimmen, nur dann, wenn entweder das mindestens eine angetriebene Rad (6) durchdreht oder dazu tendiert durchzudrehen oder das Fahrzeug (1) unter Einwirkung des Antiblockiersystems gebremst wird.

6. Computerprogrammprodukt, umfassend ein computerlesbares Medium, auf welchem ein Computerprogramm gemäß Anspruch 5 gespeichert ist.

7. Elektronische Steuereinheit, die dazu ausgebildet ist, mit einem fahrzeuginternen Netzwerkbus (14) in einem Fahrzeug (1) verbunden zu werden, umfassend Speichermittel (21), auf welchen ein Computerprogramm gemäß Anspruch 5 gespeichert ist.

8. Elektronische Steuereinheit nach Anspruch 7, wobei die elektronische Steuereinheit eine getriebeelektronische Steuereinheit (12) ist.

## Revendications

1. Procédé pour déterminer une vitesse d'un véhicule (1) utilisée pour la commande de changement de vitesse d'un système de changement de vitesse automatique, le véhicule ayant un système de changement de vitesse automatique, des roues motrices (6), des roues non motrices (10), un système pour déterminer si au moins l'une des roues motrices (6) patine ou présente une tendance au patinage, et un système de freinage antiblocage, le procédé comprenant l'étape consistant à :
- déterminer si au moins l'une des roues motrices (6) patine ou présente une tendance au patinage et/ou si le véhicule (1) est freiné sous l'influence du système de freinage antiblocage, et est **caractérisé en ce qu'**il comprend en outre l'étape consistant à :
- déterminer la vitesse du véhicule à partir de la vitesse de rotation d'une ou plusieurs des roues non motrices (10) uniquement, si l'au moins une roue motrice (6) patine ou présente une tendance au patinage ou si le véhicule (1) est freiné sous l'influence du système de freinage antiblocage.

2. Procédé selon la revendication 1, comprenant l'étape consistant à :
calculer la vitesse du véhicule à partir d'un régime moteur, d'une vitesse de l'arbre de transmission et/ou d'une vitesse de vilebrequin, si l'au moins une roue motrice (6) ne patine pas ou ne présente pas de tendance au patinage, ou si le véhicule (1) n'est pas freiné sous l'influence du système de freinage antiblocage.

3. Véhicule (1) comprenant :
un système de changement de vitesse automatique, des roues motrices (6), des roues non motrices (10), un système pour déterminer si au moins l'une des roues motrices (6) patine ou présente une tendance au patinage, et un système de freinage antiblocage,
**caractérisé par** :
des moyens de calcul (23) pour calculer une vitesse du véhicule utilisée pour la commande du changement de vitesse dudit système de changement de vitesse automatique à partir de la vitesse de rotation d'une ou plusieurs des roues non motrices (10) uniquement,
des moyens de détermination (22) pour déterminer la vitesse du véhicule pour commander le changement de vitesse dudit système de changement de vitesse automatique, à partir de la vitesse de rotation d'une ou plusieurs des roues non motrices (10) uniquement, si l'au moins une roue motrice (6) patine ou présente une tendance au patinage ou si le véhicule (1) est freiné sous l'influence du système de freinage antiblocage.

4. Véhicule (1) selon la revendication 3, **caractérisé par** :
des moyens de calcul pour calculer la vitesse du véhicule pour commander le changement de vitesse dudit système de changement de vitesse automatique à partir d'un régime moteur, d'une vitesse de l'arbre de transmission et/ou d'une vitesse du vilebrequin, si l'au moins une roue motrice (6) ne patine pas ou ne présente pas de tendance au patinage, ou si le véhicule (1) n'est pas freiné sous l'influence du système de freinage antiblocage.

5. Programme informatique pour déterminer une vitesse d'un véhicule pour une commande de changement de vitesse automatique, comprenant des moyens formant code lisibles par ordinateur qui, lorsqu'ils sont exécutés sur une unité de commande électronique dans un véhicule (1), comprenant un système de changement de vitesse automatique, des roues motrices (6), des roues non motrices (10), un système pour déterminer si au moins l'une des roues motrices (6) patine ou présente une tendance au patinage, et un système de freinage antiblocage, amènent l'unité de commande électronique à :
- déterminer si au moins l'une des roues motrices (6) patine ou présente une tendance au patinage et/ou si le véhicule (1) est freiné sous l'influence du système de freinage antiblocage, et est **caractérisé en ce qu'**il amène en outre l'unité de commande électronique à :
- déterminer la vitesse du véhicule à partir de la vitesse de rotation d'une ou plusieurs des roues non motrices (10) uniquement, si l'au moins une roue motrice (6) patine ou présente une tendance au patinage ou si le véhicule (1) est freiné sous l'influence du système de freinage antiblocage.

6. Produit de programme informatique comprenant un support lisible par ordinateur sur lequel est stocké un programme informatique selon la revendication 5.

7. Unité de commande électronique adaptée pour être raccordée au bus du réseau interne du véhicule (14) dans un véhicule (1), comprenant des moyens de stockage (21) sur lesquels est stocké un programme informatique selon la revendication 5.

8. Unité de commande électronique selon la revendication 7, dans lequel l'unité de commande électronique est une unité de commande électronique de boîte de vitesse (12).
